(19) Europäisches Patentamt
European Patent Office
Office européen des brevets

(11) Veröffentlichungsnummer: **0 010 306**
**B1**

(12) # EUROPÄISCHE PATENTSCHRIFT

(45) Veröffentlichungstag der Patentschrift: **18.08.82**

(51) Int. Cl.³: **C 08 F 14/06**, C 08 F 2/24

(21) Anmeldenummer: **79104047.0**

(22) Anmeldetag: **19.10.79**

(54) **Verfahren zur Herstellung von Vinylhalogenidhomo- und -copolymerisaten.**

(30) Priorität: **19.10.78 DE 2845569**

(43) Veröffentlichungstag der Anmeldung: **30.04.80 Patentblatt 80/9**

(45) Bekanntmachung des Hinweises auf die Patenterteilung: **18.08.82 Patentblatt 82/33**

(84) Benannte Vertragsstaaten: **AT BE CH DE FR GB IT NL SE**

(56) Entgegenhaltungen:
**DE-A-2 648 833**
**DE-A-2 739 708**

(73) Patentinhaber: **WACKER-CHEMIE GMBH, Prinzregentenstrasse 22, D-8000 München 22 (DE)**

(72) Erfinder: **Sabel, Alex, Dr. Dipl.-Chem., Baaderstrasse 8, D-8263 Burghausen (DE)**
Erfinder: **Stange, Hans, Dr. Dipl.-Chem., Hohenbrunner Strasse 3, D-8000 München 82 (DE)**
Erfinder: **Bauer, Johann, Dr.-Ing. Dipl.-Chem., Görresstrasse 3, D-8263 Burghausen (DE)**
Erfinder: **Kretschmer, Reinhard, Dr. Dipl.-Ing., Ludwig-Thoma-Strasse 29, D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

Verfahren zur Herstellung von Vinylhalogenidhomo- und -copolymerisaten

Die Erfindung betrifft ein Verfahren zur Herstellung von Vinylchloridhomo- und -copolymerisaten in wässriger Dispersion.

Die Herstellung von Vinylchloridhomo- und -copolymerisaten in wässriger Dispersion erfolgt allgemein durch Emulsions-, Suspensions- bzw. Mikroperlpolymerisation. Diese Verfahren sind dem Fachmann grundsätzlich geläufig. Für diese Verfahren sind die verschiedensten Rezepturen entwickelt worden, z.B. um gleichmässigere, feinere und porösere Polymerteilchen zu erzielen. Dadurch kann nämlich bereits weitgehend die Bildung von gröberen und glasigen Teilchen vermieden werden, die bei der Weiterverarbeitung eine verminderte Weichmacheraufnahme zeigen und im Fertigprodukt als deutlich erkennbare unaufgeschlossene Teilchen, sogenannte Fischaugen, zu beobachten sind. So ist z.B. in der DE-A-26 48 833 zur diesbezüglichen Verbesserung der Kornmorphologie und als Puffersubstanz für die Polymerisation der Zusatz von Polyhydroxyacrylsäuren und deren Alkalisalzen empfohlen worden.

Weitgehend unberücksichtigt ist jedoch zunächst geblieben, dass bei der Herstellung von Polymerisaten des Vinylchlorids in wässriger Dispersion Verluste an Monomeren auftraten, die sich in Form von Krusten und Schwarten an der Innenwandung von Autoklaveneinbauten anlegten. Dieser polymere Wandbelag an der Innenwand und den Einbauten des Autoklaven tritt besonders an schlecht beströmten Stellen auf und ist in mehrfacher Hinsicht schädlich, da der Wärmeübergang vom Polymeransatz zum Heiz- bzw. Kühlmantel negativ beeinflusst wird und das Produkt in zunehmendem Masse Qualitätsmängel durch Verunreinigungen aufweist, die durch unkontrolliertes Ablösen von Wandbelag eingeschleppt werden. Solche Verunreinigungen werden vom Fachmann ebenfalls als «Fischaugen» bezeichnet, da sie sich im Produkt in der schon oben beschriebenen Weise äussern. Eine Reinigung der Autoklavenwand und der Autoklaveneinbauten von anhaftendem Polymerisat ist somit unerlässlich.

Später ist dann bereits versucht worden, die Wandanlage durch Zusatzmittel zu vermindern oder gar ganz zu verhindern. So schlägt beispielsweise die DE-A-27 39 708 den Zusatz von Salzen organischer, hydroxylierter Carbonsäure, vorzugsweise von Tartraten vor. Zwar konnte damit bereits eine merkliche, aber noch nicht befriedigende Reduktion der Wandanlage erreicht werden, die jedoch mit einer Herabsetzung der Polymerstabilität erkauft werden musste (vgl. weiter unten, Tabelle 1).

Aufgabe der Erfindung war es somit, Polymerisationshilfsstoffe anzugeben, die die Ausbildung von Wandanlage im Polymerisationsgefäss verhindern.

Zweck der Erfindung ist es, ein Polymerisationsverfahren anzugeben, bei dem die Homo- bzw. Copolymerisation von Vinylchlorid in geschlossener Fahrweise, d.h. durch kontinuierliche bzw. bei diskontinuierlicher Fahrweise ohne Öffnen des Polymerisationsgefässes im Anschluss an die Polymerisationsphase durchgeführt werden kann.

Gegenstand der Erfindung ist ein Verfahren zur Herstellung von Vinylchloridhomo- und -copolymerisaten mit mindestens 60 Gew.-% einpolymerisierten Vinylchlorideinheiten und ggf. bis zu 40 Gew.-% von mit Vinylchlorid copolymerisierbaren Monomereinheiten in Gegenwart von 0,01 bis 3 Gew.-% Radikalinitiatoren, bezogen auf Monomere, Emulgatoren in Mengen von 0,01 bis 5 Gew.-% und/oder Schutzkolloiden in Mengen von 0,01 bis 3 Gew.-% in Gegenwart eines Wandanlageverhinderers im Polymerisationsautoklaven bei Drücken zwischen 1 und 100 bar und Temperaturen zwischen −20 und 100 °C in wässriger Dispersion, bis zu Feststoffgehalten zwischen 10 und 60 Gew.-% bei kontinuierlicher bzw. diskontinuierlicher Polymerisation, dadurch gekennzeichnet, dass zur Wandanlageverhinderung wasserlösliche Polymere mit Carbonsäuregruppen, Aldehydgruppen und ggf. Hydroxylgruppen eingesetzt werden.

Diese Polymerisationshilfsstoffe, die die Ausbildung von Verkrustungen in Polymerisationsgefässen verhindern, sind Polymere, die 10 bis 90%, vorzugsweise 20 bis 60 %, Carbonsäuregruppen, 10 bis 90%, vorzugsweise 40 bis 80%, Aldehydgruppen und 0 bis 60% Hydroxylgruppen, bezogen auf die Gesamtheit der funktionellen Gruppen, aufweisen und das Polymere pro Carbonsäuregruppe 1 bis 6 gesättigte Kohlenstoffatome, pro Aldehydgruppe 2 bis 6 gesättigte Kohlenstoffatome, pro Hydroxylgruppe 1 bis 6 gesättigte Kohlenstoffatome aufweist, wobei die funktionellen Gruppen statistisch entlang der Polymerisationskette verteilt sind. Solche Polymere sind aus 10 bis $10^5$, vorzugsweise 10 bis 500, funktionelle Gruppen tragende, Monomereinheiten aufgebaut. Copolymerisate aus Acrolein und Acrylsäure bzw. Crotonaldehyd und Acrylsäure haben sich gut bewährt. Die Polymerisationshilfsstoffe zur Verhinderung von Wandanlageverkrustungen werden in Konzentrationen zwischen 5 ppm und 3 Gew.-% dem bei der Polymerisation in wässriger Dispersion eingesetzten Wasser zugesetzt.

Überraschenderweise wird bei erfindungsgemässer Verfahrensweise die Verkrustung der Polymerisationsgefässe wesentlich herabgesetzt, so dass eine geschlossene Polymerisationsfahrweise möglich wird. Dies bedeutet eine wesentliche Vereinfachung des verfahrenstechnischen Polymerisationsablaufs, verbunden mit einer Steigerung der Autoklavenproduktivität. Weiterhin war es nicht zu erwarten, dass die nach dem erfindungsgemässen Verfahren hergestellten Vinylchloridhomo- und -copolymerisate sowohl im Entgasungsverfahren zur Herabsetzung des Restmonomerengehaltes als auch als Polymerisatmasse sich durch besondere Thermostabilität auszeichnen.

Die hohe Wirksamkeit des Wandanlageverhinderers erlaubte es, bereits bei geringen Zusatzmengen wie beispielsweise Mengen zwischen 5 und 500 ppm, bezogen auf wässrige Phase, auf eine Kontrolle des Autoklaveninneren nach jedem Polymerisationszyklus durch Öffnen des Autoklavendeckels zu verzichten. Dadurch unterbleibt ein Kontakt des Polymerisationsansatzes mit Luftsauerstoff über die Dauer der Ansatzfolgen. Luftsauerstoff wirkt inhibierend, verursacht einen vermehrten Chlorionengehalt im Polymerisationswasser und macht eine höhere Initiatorkonzentration erforderlich. Der Zusatz grösserer Mengen des Wandanlageverhinderers über 5 bis 500 pm hinaus erhöht die Thermostabilität der erfindungsgemäss hergestellten Polymerisate zunehmend. Dies wirkt sich insbesondere bei der Entfernung von Restmonomeren aus dem Polymerisat aus. Zusatzmengen bis zu 3 Gew.-%, bezogen auf Wasserphase im Polymerisationsprozess können zugesetzt werden, wobei der Zusatzmenge des Wandanlageverhinderers/Stabilisators nach oben lediglich durch die Löslichkeit praktische Grenzen gesetzt sind. Die Stabilisierungswirkung tritt jedoch bereits bei Zugabemengen zwischen 50 ppm und 2 Gew.-% deutlich in Erscheinung.

Eine Reglerwirkung der Polyaldehydcarbonsäuren, die ggf. Hydroxylgruppen enthalten können, wie sie bei molekular eingesetzten Aldehyden zu beobachten ist, kann im erfindungsgemässen Konzentrationsbereich nicht beobachtet werden.

Die erfindungsgemäss eingesetzten Polymerisationshilfsstoffe sind beispielsweise Polyaldehydcarbonsäuren, die ggf. auch Hydroxylgruppen enthalten können. Diese Polymeren können durch Polymerisation der funktionelle Gruppen tragenden Monomeren hergestellt werden. Als Carbonsäuregruppen tragende polymerisierbare Monomere sind beispielsweise Acrylsäure, Methacrylsäure, Crotonsäure, Vinylessigsäure, Maleinsäure bzw. Maleinsäureanhydrid und Fumarsäure zu nennen.

Die Begrenzung der Kohlenstoffzahl pro Carbonsäuregruppe auf 1 bis 6 Kohlenstoffatome ist vorteilhaft. Als Aldehydgruppen tragende polymerisierbare Monomere eignen sich beispielsweise Acrolein, Methacrolein, Crotonaldehyd und Isocrotonaldehyd. Natürlich sind auch Copolymerisate mit Carbonsäure und Aldehydfunktion in diesem Zusammenhang erwähnenswert, bei denen die Aldehydfunktion vollständig oder auch nur teilweise durch eine Ketonfunktion ersetzt sind. Dies kann durch Copolymerisation mit geeigneten Monomeren, wie z.B. Methylvinylketon erfolgen. Polyaldehydcarbonsäure, die zusätzlich funktionelle Hydroxylgruppen aufweisen, können beispielsweise durch Disproportionierung mit Natronlauge, ausgehend von Polyaldehydcarbonsäuren zu Polyhydroxycarboxylaten vollständig bzw. teilweise umgesetzt werden. Weiterhin kann nach dem Verfahren der «Oxidativen Polymerisation», beispielsweise ein ungesättigter Aldehyd alleine bzw. im Gemisch mit einer ungesättigten Carbonsäure in Gegenwart von Wasserstoffperoxid polymerisiert werden. Durch Wasserstoffperoxid wird ein Teil der Aldehydgruppen zu Carboxylgruppen oxidiert. So entstehen Polymere mit seitenständigen Aldehyd- und Carboxylgruppen. Eine weitere Variante der Herstellung von Polyaldehydcarbonsäuren, die funktionelle Hydroxylgruppen tragen, besteht darin, dass eine Cannizzaro-Reaktion auch in Gegenwart von Formaldehyd unter gleichzeitiger Aldolreaktion durchgeführt wird. Es entstehen in α-Stellung zu den Aldehydgruppen methylolierte Polyhydroxycarboxylate. Durch Wahl der Reaktionsbedingungen können Carboxyl-, Carbonyl- und Hydroxylgehalte sowie das mittlere Molekulargewicht der erfindungsgemäss eingesetzten Polymerisationshilfsstoffe in weiten Grenzen variiert werden.

Die Polymerisationshilfsstoffe zur Verhinderung der Wandanlage werden üblicherweise als wässrige Lösungen zur Anwendung gebracht. Vornehmlich werden sie dem Polymerisationsansatz mit der wässrigen Phase vor Polymerisationsbeginn zugegeben. Ein weiterer Teil der wässrigen Phase mit einem erfindungsgemässen Gehalt der wandanlageverhindernden Polymerisationshilfsstoffe kann während des Polymerisationsverfahrens zur Besprühung der Autoklaventeile, die nicht von der Polymerisationsflotte bespült werden, eingesetzt werden.

Natürlich kann auf gleiche Weise durch Besprühen eines im Polymerisationsverfahren eingesetzten Rückflusskühlers einer Verkrustung im Rückflusskühler vorgebeugt werden.

Die Erfahrung zeigt, dass bei stark beanspruchten Autoklavenwandungen zunächst eine höhere Konzentration notwendig ist, bis eine gewisse Passivierung der Wandung nach mehrmaliger Anwendung erfolgt ist. Danach kann die Konzentration des Hilfsstoffes herabgesetzt werden. Das erfindungsgemässe Verfahren wird auf die Vinylchloridhomopolymerisation angewandt. Zur Copolymerisation von Vinylchlorid sind beispielsweise eines oder mehrere der folgenden Monomeren geeignet: halogensubstituiertes Äthylen, wie Vinylbromid, Vinylfluorid, Vinylidenchlorid, Vinylidenfluorid, Olefine, wie Äthylen, Propylen, Vinylester geradkettiger oder verzweigter Carbonsäuren mit 2 bis 20 Kohlenstoffatomen, insbesondere Vinylacetat, Vinylpropionat, Vinyl-2-Äthylhexoat, Vinylversatat* 911 bzw. Vinylversatat* 1519, Vinyläther, Vinylpyridin, ungesättigte Säuren, wie Malein-, Fumar-, Acryl-, Methacrylsäure und deren Mono- oder Diester mit Mono- oder Dialkoholen mit 1 bis 10 Kohlenstoffatomen, Maleinsäureanhydrid, Acrylnitril und Styrol. Der Anteil an einpolymerisiertem Vinylchlorid soll dabei 60 Gew.-% nicht unterschreiten. (*Vinylester der Versatic $^{R}$-Säuren).

Das erfindungsgemässe Verfahren zur Polymerisation in wässriger Dispersion umfasst die Polymerisationsverfahren der Suspensions-, Emulsions- sowie der Mikroperlpolymerisation. Auch Pfropfpolymerisationen können vorteilhaft durchgeführt werden, bei denen Vinylchlorid das pfropfende Agens ist.

Die Polymerisationstemperaturen liegen dabei im allgemeinen zwischen −20 und 100 °C, vorzugsweise 30 bis 80 °C

Bei der Emulsionspolymerisation werden üblicherweise wasserlösliche Radikalinitiatoren, wie z.B. Wasserstoffperoxid, Persulfate, organische wasserlösliche Peroxide, wie z.B. t-Butylhydroperoxid, oder auch wasserlösliche Azoverbindungen, einzeln oder in Kombination, in Mengen von 0,1 bis 3 Gew.-%, bezogen auf Monomere, eingesetzt.

Als Emulgatoren werden nichtionische, anionische und, in untergeordnetem Masse kationische Tenside, mit HLB-Werten zwischen 5 und 20, wie z.B. Fettseifen, Alkylsulfonate, Alkansulfonate, Alkylbenzolsulfonate, Alkylnaphthalinsulfonate, Sulfobernsteinsäureester und -halbester, Teilphosphorsäureester, Alkylammoniumsalze, Alkylphenole mit 5 bis 30 Mol-Einheiten an kondensierten Äthylenoxideinheiten, Zuckerester, wie Sorbitanmonolaurat, einzeln oder im Gemisch, in Mengen von 0,01 bis 5 Gew.-%, bezogen auf Monomerphase, eingesetzt.

Bei der Suspensionspolymerisation können ebenfalls die genannten Emulgatoren in Mengen von 0,05 bis 3 Gew.-% zum Einsatz gelangen. Als Suspensionsstabilisatoren werden Schutzkolloide, wie z.B. Zellulosederivate, Methylzellulose, Carboxymethylzellulose, Hydroxyäthylzellulose, Hydroxypropylzellulose, Methylhydroxyäthylzellulose, Methylhydroxypropylzellulose, Methylhydroxybutylzellulose, Zelluloseäther, Aminoäthylhydroxypropylzellulose, hydrolysierte Polyvinylacetate mit bis zu 60 Mol.-% Restacetatgruppen, wasserlösliche Stärkeäther, Poly-N-Vinylverbindungen, wie Polyvinylpyrrolidon, einzeln oder im Gemisch, in Mengen zwischen 0,01 und 3 Gew.-% bezogen auf Monomerphase, eingesetzt. Als Radikalinitiatoren werden 0,01 bis 3 Gew.-%, bezogen auf Monomere, wie Diaryl-, Diacylperoxide, Dialkylperoxide, Perester, Dialkylperoxydicarbonate, Acylalkylperoxidicarbonate, gemischte Anhydride von organischen Sulfopersäuren, üblicherweise einzeln oder im Gemisch, eingesetzt.

Auf das Verfahren der Mikroperlpolymerisation als Variante der Suspensionspolymerisation mit Vordispergierung der Monomeren in Wasser in Gegenwart von Emulgatoren und/oder Schutzkolloiden sind die bisher genannten Emulgatoren und Schutzkolloide analog anwendbar.

Die Polymerisation wird bis zu Feststoffgehalten zwischen 10 und 60 Gew.-% geführt. Das erfindungsgemässe Verfahren unter Vermeidung von Wandanlage ist sowohl für kontinuierliche wie chargenweise Polymerisation geeignet.

Zusätzlich können bei der Polymerisation in wässriger Dispersion pH-Stabilisatoren, Teilchengrössenregulatoren, Molekulargewichtsregler, Weichmacher und ggf. andere Verkrustungsinhibitoren zugesetzt werden.

Der Polymerisationsdruck liegt zwischen 1 und 100 bar, häufig wird besonders in Abwesenheit von Äthylen als zu copolymerisierendem Monomeren ein Polymerisationsdruck von 15 bar nicht überschritten. Der pH-Wert liegt im allgemeinen zwischen 2 und 7. Die erhaltenen Polymerisate können für alle bekannten Anwendungen von Vinylchloridhomo- und -copolymerisaten eingesetzt werden.

Das Verfahren soll zusätzlich durch folgendes Beispiel veranschaulicht werden:

Beispiel 1

In einem 400-l Stahlautoklav mit Impeller und Stromstörer und einem H/D-(Höhe: Durchmesser)-Verhältnis von 1.37 werden zur Herstellung von S–PVC die folgenden Rezepturbestandteile in der angeführten Reihenfolge eingefüllt: 200 kg vollentsalztes Wasser, die in Tabelle 1 angeführte Menge Verkrustungsinhibitor, 0,1 kg teilverseifter Polyvinylalkohol mit einem Hydrolysegrad von 70% und einer Viskosität von 5 Pa·s (4%ige wässrige Lösung bei 20 °C) sowie 0,1 kg Methylcellulose mit einer Viskosität von 25 Pa·s (2%ige wässrige Lösung bei 20 °C), 0,05 kg Na-bicarbonat und schliesslich 0,05 kg Cetylperoxidicarbonat. Netzmittel und Verkrustungsinhibitor wurden vor ihrer Zugabe in Teilmengen aus der Gesamtmenge an Wasser in Lösung gebracht. Nach dem Verschliessen des Autoklaven wurde zweimal evakuiert (auf 26,7 kPa), wobei dazwischen mit Inertgas entspannt worden war. Nach dem zweiten Evakuieren werden 100 kg Vinylchlorid zugegeben. Der so vorbereitete Ansatz wird dann unter Rühren (150 U/Minute) auf 60 °C aufgeheizt. Nach einer Laufzeit von 7 3/4 Stunden wird nach einem Druckabfall um 1,5 bar entspannt, das Rest-VC verdampft und das Reaktionsprodukt in üblicher Weise durch Filtrieren, Waschen und Trocknen isoliert. Ohne weitere Autoklavenreinigung werden 6 Ansätze in gleicher Weise gefahren. Dann wird der Autoklav einschliesslich Rührer, Wellenbrecher und Gasraum mechanisch mit Spachteln gereinigt und der dabei isolierte Kesselputz getrocknet und gewogen. In dieser Weise sind neben einem Blindversuch die erfindungsgemässe Polyaldehydcarbonsäure sowie zu Vergleichszwecken eine technische Weinsäure untersucht worden. In Tabelle 1 sind die Ergebnisse zusammengestellt.

Tabelle 1
Verkrustungsinhibitor

| Beispiel | Verkrustungsinhibitor pro Ansatz | Verkrustung nach 6 Ansätzen | Hellikeitswert |
|---|---|---|---|
| 1 | 0,05 % Weinsäure | 3,6 kg | 38,2 |
| 2 | 0,05 % Polyaldehydcarbonsäure* | 2,6 kg | 51,7 |
| 3 | – Blindversuch | 4,0 kg | 40,0 |

Zur Beurteilung der thermischen Stabilität werden jeweils 100 Gewichtsteile PVC vermischt mit 50 Gewichtsteilen Dioctylphthalat, 0,5 Gewichtsteilen bas. Pb-Sulfat und 0,2 Gewichtsteilen Gleitwachs. Diese Mischung wird 2 Minuten bei 100 °C zu einem Fell verwalzt, das dann 15 Minuten bei 190 °C zu einer 1 mm starken Pressplatte verpresst wird. Die dabei auftretende Verfärbung wird fotometrisch nach DIN 6174 bestimmt, wobei als Bezugsstandard eine Ba-sulfatplatte mit der Helligkeit = 100 dient.

$$* \; HO-(CH_2-\underset{\displaystyle COOH}{\underset{|}{CH}}-)_{20}\,(CH_2-\underset{\displaystyle CH=O}{\underset{|}{CH}}-)_{20}-OH$$

**Patentansprüche**

1. Verfahren zur Herstellung von Vinylchloridhomo- und -copolymerisaten mit mindestens 60 Gew.-% einpolymerisierten Vinylchlorideinheiten und ggf. bis zu 40 Gew.-% von mit Vinylchlorid copolymerisierbaren Monomereinheiten in Gegenwart von 0,01 bis 3 Gew.-% Radikalinitiatoren, bezogen auf Monomere, Emulgatoren in Mengen von 0,01 bis 5 Gew.-% und/oder Schutzkolloide in Mengen von 0,01 bis 3 Gew.-%, bezogen auf Monomere, in Gegenwart eines Wandanlageverhinderers im Polymerisationsautoklaven bei Drücken zwischen 1 und 100 bar und Temperaturen zwischen − 20 und 100 °C in wässriger Dispersion bis zu Feststoffgehalten zwischen 10 und 60 Gew.-%, bei kontinuierlicher bzw. diskontinuierlicher Polymerisation, dadurch gekennzeichnet, dass zur Wandanlageverhinderung wasserlösliche Polymere mit Carbonsäuregruppen, Aldehydgruppen und ggf. Hydroxylgruppen eingesetzt werden.

2. Verfahren nach Anspruch 1, dadurch gekennzeichnet, dass das zur Wandanlageverhinderung eingesetzte Polymere 10 bis 90%, vorzugsweise 20 bis 60%, Carbonsäuregruppen, 10 bis 90%, vorzugsweise 40 bis 80%, Aldehydgruppen und 0 bis 60% Hydroxylgruppen, bezogen auf die Gesamtheit der funktionellen Gruppen, aufweist und das Polymere pro Carbonsäuregruppe 1 bis 6 gesättigte Kohlenstoffatome, pro Aldehydgruppe 2 bis 6 gesättigte Kohlenstoffatome, pro Hydroxylgruppe 1 bis 6 gesättigte Kohlenstoffatome aufweist und die funktionellen Gruppen statistisch entlang der Polymerkette verteilt sind.

3. Verfahren nach Anspruch 1 bis 2, dadurch gekennzeichnet, dass das wandanlageverhindernde Polymere aus 10 bis $10^5$, vorzugsweise 10 bis 500 Monomereinheiten aufgebaut ist.

4. Verfahren nach Anspruch 1 bis 3, dadurch gekennzeichnet, dass das die Wandanlage verhindernde Polymere aus Monomereinheiten, die sich von Acrolein und Acrylsäure ableiten, aufgebaut ist.

5. Verfahren nach Anspruch 1 bis 3, dadurch gekennzeichnet, dass das die Wandanlage verhindernde Polymere aus Monomereinheiten, die sich von Crotonaldehyd und Acrylsäure ableiten, aufgebaut ist.

6. Verfahren nach Anspruch 1 bis 3 und 4 oder 5, dadurch gekennzeichnet, dass das die Wandanlage verhindernde Polymere in Konzentrationen zwischen 5 ppm und 3 Gew.-%, bezogen auf wässrige Phase, dem Polymerisationswasser zugesetzt wird.

**Revendications**

1. Procédé pour préparer des homo- ou des copolymères du chlorure de vinyle contenant au moins 60% en poids de motifs de chlorure de vinyle incorporés par polymérisation, et, éventuellement, jusqu'à 40% en poids de motifs de monomères pouvant être copolymérisés avec du chlorure de vinyle, en présence de 0,01 à 3% en poids, par rapport aux monomères, de promoteurs de radicaux, d'émulsionnants en des quantités allant de 0,01 à 5% en poids et/ou de colloïdes protecteurs en des quantités allant de 0,01 à 3% en poids par rapport aux monomères, et en présence d'un composé empêchant des sédiments polymères sur les murs de l'autoclave de polymérisation sous des pressions comprises entre 1 et 100 bar et des températures comprises entre − 20 et 100 °C en dispersion aqueuse jusqu'à des teneurs en matières solides comprises entre 10 et 60% en poids dans une polymérisation continue et/ou discontinue, procédé caractérisé en ce que l'on utilise des polymères hydrosolubles contenant des groupes d'acides carboxyliques, d'aldéhydes, et, éventuellement, d'hydroxyles pour empêcher des sédiments polymères sur les murs de l'autoclave.

2. Procédé selon la revendication 1, caractérisé en ce que le polymère utilisé pour empêcher des sédiments polymères sur les murs de l'autoclave contient de 10 à 90%, de préférence 20 à 60%, de groupes d'acides carboxyliques, de 10 à 90%, de préférence 40 à 80%, de groupes d'aldéhydes et de 0 à 60% de groupes d'hydroxyles, tous ces pourcentages étant basés sur le nombre total de groupes fonctionnels dans le polymère, et en ce que le polymère contient de 1 à 6 atomes saturés de carbone par groupe d'acides carboxyliques, de 2 à 6 atomes saturés de carbone par groupe d'aldéhydes et de 1 à 6 atomes saturés de carbone par groupe d'hydroxyles, et en ce que les groupes fonctionnels sont répartis statistiquement au long de la chaîne polymère.

3. Procédé selon l'une des revendications 1 et 2, caractérisé en ce que le polymère empêchant des sédiments polymères sur les murs de l'autoclave contient de 10 à $10^5$, de préférence 10 à 500, motifs de monomères.

4. Procédé selon l'une des revendications 1 à 3, caractérisé en ce que le polymère empêchant des sédiments polymères sur les murs de l'autoclave est constitué de motifs monomères qui sont dérivés de l'acroléine et de l'acide acrylique.

5. Procédé selon l'une des revendications 1 à 3, caractérisé en ce que le polymère empêchant des sédiments polymères sur les murs de l'autoclave est constitué de motifs monomères qui sont dérivés de l'aldéhyde crotonique et de l'acide acrylique.

6. Procédé selon l'une des revendications 1 à 3 et 4 ou 5, caractérisé en ce que le polymère empêchant des sédiments polymères sur les murs de

l'autoclave est ajouté à l'eau de polymérisation en des concentrations comprises entre 5 ppm et 3% en poids par rapport au poids de la phase aqueuse.

**Claims**

1. A process for the manufacture of vinyl chloride homopolymers and vinyl chloride copolymers with at least 60 % by weight of vinyl chloride units polymerized therein and, optionally, up to 40 % by weight of monomer units copolymerizable with vinyl chloride in the presence of from 0,01 to 3 % by weight, based on monomers, of free-radical initiators, emulsifiers in amounts of from 0,01 to 5 % by weight, and/or protective colloids in amounts of from 0,01 to 3 % by weight, based on monomers, and in the presence of a compound preventing polymeric deposits on the walls of the polymerization autoclave, at pressures of between 1 to 100 bar and temperatures of between −20 and 100 °C in an aqueous dispersion up to solids contents of between 10 and 60 % by weight in a continuous and/or discontinuous polymerization, characterized in that for preventing polymeric wall deposits water-soluble polymers containing carboxylic acid groups, aldehyde groups and, optionally, hydroxy groups, are used.

2. A process according to claim 1, characterized in that the polymer used for preventing polymeric wall deposits contains from 10 to 90 %, preferably 20 to 60 %, of carboxylic acid groups, from 10 to 90 %, preferably 40 to 80 %, of aldehyde groups, and from 0 to 60 % of hydroxy groups, all percentages being based on the total number of functional groups in the polymer, and that said polymer contains from 1 to 6 saturated carbon atoms per carboxylic acid group, from 2 to 6 saturated carbon atoms per aldehyde group, and from 1 to 6 saturated carbon atoms per hydroxy group, and that the functional groups are statistically distributed along the polymer chain.

3. A process according to claim 1 or 2, characterized in that the polymer preventing polymeric wall deposits contains from 10 to $10^5$, preferably 10 to 500, monomer units.

4. A process according to any one of claims 1 to 3, characterized in that said polymer preventing polymeric wall deposits comprises monomer units which are derived from acrolein and acrylic acid.

5. A process according to any one of claims 1 to 3, characterized in that said polymer preventing polymeric wall deposits comprises monomer units which are derived from crotonic aldehyde and acrylic acid.

6. A process according to any one of claims 1 to 3 and 4 or 5, characterized in that said polymer preventing polymeric wall deposits is added to the polymerization water in concentrations of between 5 ppm and 3 % by weight based on the weight of the aqueous phase.